# EUROPÄISCHE PATENTSCHRIFT

(11) **EP 1 558 898 B1**
(45) Veröffentlichungstag und Bekanntmachung des Hinweises auf die Patenterteilung: **28.02.2007**
(21) Anmeldenummer: 03782092.5
(22) Anmeldetag: 06.11.2003
(51) Int. Cl.: G01F 1/58

(54) **MAGNETISCH INDUKTIVER DURCHFLUSSMESSER**
MAGNETICALLY INDUCTIVE FLOWMETER
DEBITMETRE A INDUCTION MAGNETIQUE

(30) Priorität: 06.11.2002 DE 10252041
(43) Veröffentlichungstag der Anmeldung: 03.08.2005
(73) Patentinhaber: SIEMENS AKTIENGESELLSCHAFT, 80333 München (DE)
(72) Erfinder: JENSEN, Finn, DK-8860 ULSTRUP (DK); NIELSEN, S ren, DK-6400 S nderborg (DK)
(86) Internationale Anmeldenummer: PCT/DE2003/003670
(87) Internationale Veröffentlichungsnummer: WO 2004/042328

(56) Entgegenhaltungen:
- DE-U- 20 217 213
- US-A- 3 681 986
- PATENT ABSTRACTS OF JAPAN Bd. 1995, Nr. 09, 31. Oktober 1995 (1995-10-31) -& JP 07 139980 A (FUJI ELECTRIC CO LTD), 2. Juni 1995 (1995-06-02)

## Beschreibung

Die Erfindung betrifft einen magnetisch induktiven Durchflussmesser mit einem Messrohr, einer Elektrodenanordnung mit Elektroden, die auf einander gegenüberliegenden Seiten des Messrohres quer zu einer Durchflussrichtung durch das Messrohr angeordnet sind, und einer Spulenanordnung mit mindestens einer Sattelspule, deren Achse quer zur Durchflussrichtung und quer zur Elektrodenanordnung verläuft und die vier Schenkel aufweist, von denen zwei erste Schenkel parallel zur Durchflussrichtung und zwei zweite Schenkel in Umfangsrichtung des Messrohres verlaufen.

Ein sich bewegendes elektrisch leitfähiges Fluid, das das Messrohr durchströmt, erzeugt eine Spannung zwischen den Elektroden der Elektrodenanordnung, wenn die Spulenanordnung ein Magnetfeld erzeugt. Das Magnetfeld ist dabei senkrecht zur Durchströmungsrichtung gerichtet.

Die Spannung wird senkrecht zur Durchströmungsrichtung und senkrecht zum Magnetfeld abgenommen. Die Spannung an der Elektrodenanordnung ist dann u.a. abhängig von der Strömungsgeschwindigkeit, aus der wiederum auf die Durchflussmenge geschlossen werden kann.

Für die Messgenauigkeit eines derartigen Durchflussmessers ist es von einer gewissen Bedeutung, dass sich das Magnetfeld über die gesamte Querschnittsfläche des Messrohres erstreckt. Eine Möglichkeit, um dies zu erreichen, ist die Verwendung eines Jochs oder Polschuhs. Die Spule erzeugt dann ein Magnetfeld, das durch den Polschuh verteilt wird und sich dann weitgehend gleichmäßig über den Querschnitt des Messrohres erstreckt.

Allerdings erfordern derartige Polschuhe einen gewissen Bauraum. In vielen Fällen verwendet man daher Sattelspulen, deren Form an die Form des Messrohres angepasst ist. In der Regel weist die Spulenanordnung dabei zwei Sattelspulen auf. Von oben gesehen bilden die Sattelspulen im weitesten Sinn ein Viereck, von dem zwei Schenkel parallel zur Durchflussrichtung verlaufen. Die beiden anderen Schenkel folgen der Wölbung des Messrohres. Diese Schenkel können auch einen Bogen oder einen Winkel in axialer Richtung aufweisen, so dass die Sattelspule in der Draufsicht einem Sechseck ähnelt, also wie ein Diamant aussieht. Auch mit derartigen Sattelspulen lassen sich weitgehend zufriedenstellende Ergebnisse erreichen.

Probleme treten allerdings dann auf, wenn der Durchmesser des Messrohres verkleinert werden soll. Insbesondere ab Durchmessern von beispielsweise unter 50 mm ergeben sich in erhöhtem Maße Messfehler. Man führt dies darauf zurück, dass man die Sattelspulen nicht weit genug in Umfangsrichtung um das Messrohr herum erstrecken kann. Die Elektroden der Elektrodenanordnung benötigen nämlich einen gewissen Bauraum. In der Regel weisen sie auch noch ein kleines Anschlussgehäuse auf. Die achsparallelen ersten Schenkel der Sattelspulen müssen diesen Bauraum frei lassen. Dies hat zur Folge, dass sich das Magnetfeld nicht weit genug bis zu den Elektroden hin erstreckt. Dies führt, wie oben ausgeführt, zu Messungenauigkeiten oder -fehlern.

Der Erfindung liegt die Aufgabe zugrunde, die Messgenauigkeit bei einem Messrohr mit kleinerem Durchmesser zu verbessern.

Aus JP07139980 ist ein magnetisch induktiver Durchflussmesser bekannt, in welchem die Messgenauigkeit durch Benutzung von einem ferromagnetischen Streifen zwischen der spule und dem Rohr verbessert ist.

Diese Aufgabe wird bei einem magnetisch induktiven Durchflussmesser der eingangs genannten Art dadurch gelöst, dass zwischen jedem ersten Schenkel und dem Messrohr jeweils ein magnetisch leitendes Element angeordnet ist, das einen ersten Teil des magnetischen Flusses aufnimmt, wobei ein zweiter Teil des magnetischen Flusses aus einem von der Sattelspule umgebenen Bereich am Element vorbei tritt.

Mit dem magnetisch leitenden Element wird die Richtung des Magnetfeldes geändert und zwar in Richtung der Elektrode. Das Magnetfeld füllt dann den Querschnitt des Messrohres besser aus. Das Messsignal, das an der Elektrodenanordnung abgenommen werden kann, steigt dann, wie gewünscht, an. Allerdings erreicht man diese Verbesserung des Messergebnisses dadurch, dass man nur einen Teil des magnetischen Flusses ablenkt. Der größte Teil des magnetischen Flusses in dem Bereich, der von der Sattelspule umgeben ist, bleibt nach wie vor ungestört, d. h. er kann sich ohne Beeinflussung durch einen Polschuh oder ein anderes flussverteilendes Element im Querschnitt des Messrohres ausbreiten. Vorteilhaft ist dabei vor allem, dass sich unerwünschte Streuungen, die sich am Rand eines Polschuhs ergeben können, praktisch nicht ausbilden. Hinzu kommt, dass die Bauhöhe der Sattelspule durch das Hinzufügen des magnetisch leitfähigen Elements praktisch nicht nennenswert vergrößert wird. Das magnetisch leitende Element kann als relativ dünner Streifen ausgebildet sein, der in einen Spalt hineinpasst, der zwischen der Sattelspule und dem Messrohr in der Regel ohnehin vorhanden ist. Es ist vorzugsweise in dem Bereich in Axialrichtung des Messrohres angeordnet, in dem auch die Elektroden angeordnet sind.

Vorzugsweise geht das Element von einem Bereich am Innenrand des ersten Schenkels aus und endet zwischen dem ersten Schenkel und dem Messrohr. Der Bereich, der von der Sattelspule umschlossen wird, d. h. das sich parallel zur Achse der Sattelspule erstreckende Magnetfeld, wird durch das Element praktisch nicht gestört. Das Element ist aber in der Lage, einen Teil des Magnetflusses so umzuleiten, dass sich das Magnetfeld in die Nähe der Elektroden der Elektrodenanordnung erstreckt. Man erreicht also nennenswerte Vorteile, ohne größere Nachteile in Kauf nehmen zu müssen.

Bevorzugterweise weist das Element einen abgewinkelten Abschnitt auf, der von innen am ersten Schenkel anliegt. Innen ist dabei die Seite, die dem anderen ersten Schenkel gegenüberliegt. Innen befindet sich also im Inneren eines Umlaufs, den die Windungen der Sattelspule ausführen. Mit dem Abschnitt wird eine automatische Positionierung des Elements relativ einfach. Das Element wird einfach "bis zum Anschlag" in den Raum zwischen dem Messrohr und der Spule, genauer gesagt dem ersten Schenkel der Spule, eingeschoben. Danach ist das Element lagerichtig angeordnet.

Hierbei kann der Abschnitt am Schenkel oder am Messrohr befestigt sein. Die Befestigung kann beispielsweise durch Kleben erfolgen, insbesondere durch ein doppeltklebendes Klebeband. Der Abschnitt dient dann also zur Positionierung des Elements in mehrere Richtungen. Einmal wird eine Verlagerung des Elements in Umfangsrichtung vermieden. Auch eine Verlagerung des Elements in axialer Richtung wird durch eine Klebe-Befestigung zuverlässig unterbunden.

Bevorzugterweise ist das Element U-förmig mit zwei Armen ausgebildet und auf den ersten Schenkel von innen aufgesteckt. Das Element ist also als "Clip" ausgebildet. Ein Arm des Clips hat dabei die eigentliche magnetisch leitende Funktion, die die Richtung des Feldes ändert. Die Basis des U und der dem erstgenannten Arm gegenüberliegende Arm dienen dann im Prinzip nur zum Festhalten des Elements am ersten Schenkel der Sattelspule.

Hierbei ist besonders bevorzugt, dass die Arme aufeinander zu vorgespannt sind. Der Clip hat dann eine Federwirkung. Durch die Federwirkung der Arme wird der Clip besonders gut am ersten Schenkel der Sattelspule festgehalten.

Bevorzugterweise ist der Arm zwischen dem ersten Schenkel und dem Messrohr quer zur Durchflussrichtung länger als der andere Arm. Wie oben ausgeführt, dient der andere Arm hauptsächlich dazu, das Element am ersten Schenkel der Sattelspule festzuhalten. Dies lässt sich auch durch eine geometrisch kleinere Ausbildung zuverlässig erreichen. Durch diese Ausbildung wird also Material gespart.

Vorzugsweise erstreckt sich das Element über die Länge des ersten Schenkels in Durchflussrichtung. Damit wird über die gesamte axiale Länge der Sattelspule die gewünschte Umleitung des magnetischen Feldes in Richtung auf den Teil der Wand des Messrohres bewirkt, in der die Elektrode angeordnet ist.

Vorzugsweise weist das Element in Durchflussrichtung zwischen seinen Enden eine Ausnehmung auf. Es hat sich herausgestellt, dass auch mit einer derartigen Ausnehmung ein zufriedenstellendes Messergebnis erreicht wird. Das Magnetfeld sieht dann etwas anders aus. Es wird in Axialrichtung, d. h. in Durchflussrichtung, gespreizt. Dies spielt aber keine größere Rolle, da es hauptsächlich darauf ankommt, dass das Magnetfeld im Bereich der Elektrodenanordnung die gewünschte Verteilung hat.

Bevorzugterweise weist das Element eine wellenförmige Oberfläche auf. Es kann auch selbst gewellt sein. Mit der wellenförmigen Oberfläche ist es möglich, das Element zwischen dem ersten Schenkel der Sattelspule und dem Messrohr zu befestigen.

Vorzugsweise ist das Element durch weichmagnetisches Eisen gebildet. Weichmagnetisches Eisen hat hervorragende Eigenschaften beim Leiten von Magnetfeldern.

Alternativ dazu kann das Element durch einen magnetisch leitenden Kunststoff gebildet sein. Dies lässt sich beispielsweise dadurch realisieren, dass man einen Streifen aus einem magnetisch leitenden Kleber bildet. Hierzu wird Magnetpulver oder Eisenpulver mit Kleber gemischt und dieser Kleber wird positionsgenau zwischen dem ersten Schenkel der Sattelspule und dem Messrohr angeordnet.

Vorzugsweise ist das Element zusammen mit dem Messrohr vergossen. Mit diesem Gießvorgang kann das Element in das Messrohr eingebettet werden. Danach wird die Sattelspule auf dem Messrohr angebracht, z. B. festgeklebt, und die so gebildete Kombination in ein äußeres Rohr eingeschoben. Danach erfolgt ein zweites Vergießen. Wenn die erwähnten Teile in die Gussmasse eingebettet sind und die Gussmasse ausgehärtet ist, dann sind alle Teile richtig zueinander positioniert und es besteht keine Gefahr, dass diese Positionierung durch äußere Einflüsse verändert wird.

Bevorzugterweise hat das Element eine Erstreckung quer zur Durchflussrichtung, bei der ein Messfehler einen Minimalwert aufweist. Das Element hat, wie oben erwähnt, die Aufgabe, das Magnetfeld, das die Sattelspule erzeugt, näher an die Elektrode heranzuführen. Hierbei gibt es einen Punkt mit maximaler magnetischer Flussdichte. Dieser Punkt ist mit der Länge des Elements quer zur Durchflussrichtung, genauer gesagt in Umfangsrichtung des Messrohres oder in Tangentialrichtung des Messrohres, verlagerbar. Je länger das Element ist, desto näher kommt der Punkt an die Elektrode, und bei einer korrekten Länge ist der Messfehler fast aufgehoben. Die Länge des Elements bestimmt die Linearität des Messresultats und die "beste" Länge ist somit die Länge, die den kleinsten Linearitätsfehler zur Folge hat. Wird die Länge hingegen wieder zu groß gewählt, dann ergeben sich andere Fehler. Nur ein kleiner Teil des magnetischen Flusses der ganzen Sattelspule läuft durch das Element, aber dieser kleine Teil wird von dem Element örtlich konzentriert.

Die Erfindung wird im Folgenden anhand von bevorzugten Ausführungsbeispielen in Verbindung mit der Zeichnung näher beschrieben. Hierin zeigen:
- Fig. 1: eine schematische Darstellung zur Erläuterung des Funktionsprinzips eines magnetisch induktiven Durchflussmessers,
- Fig. 2: einen Durchflussmesser schematisch im Teilschnitt,
- Fig. 3: eine Teilansicht aus Fig. 2,
- Fig. 4: eine geänderte Ausführungsform in entsprechender Ansicht nach Fig. 3,
- Fig. 5: eine dritte Ausführungsform eines magnetisch leitenden Elements,
- Fig. 6: eine schematische Darstellung zur Erläuterung des Fehlerverhaltens und
- Fig. 7: verschiedene Feldverläufe.

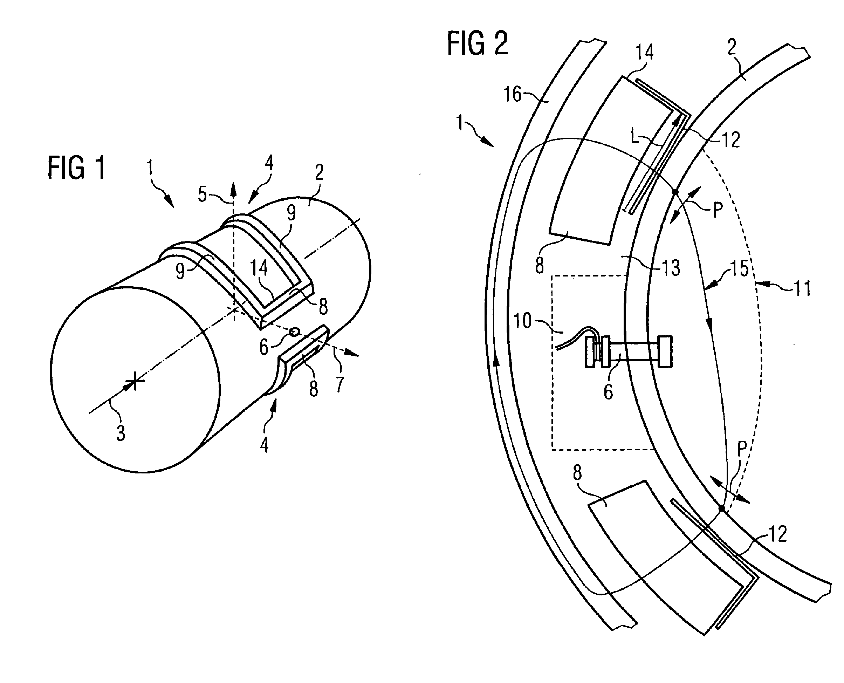

Fig. 1 zeigt einen magnetisch induktiven Durchflussmesser 1 mit einem Messrohr 2, das von einem Fluid, also einem Gas oder einer Flüssigkeit, in Axialrichtung, d. h. in einer Durchflussrichtung 3, durchflossen werden kann. Auf dem Messrohr 2 sind zwei einander gegenüberliegende Sattelspulen 4 angeordnet, die so mit Strom beaufschlagt werden, dass sie ein Magnetfeld 5 erzeugen, das durch einen Pfeil symbolisiert ist. Das Magnetfeld 5 verläuft im Wesentlichen senkrecht zur Durchflussrichtung 3. Das Magnetfeld 5 ist natürlich nicht auf einer Linie konzentriert, sondern erstreckt sich im Idealfall über den gesamten Querschnitt des Messrohres 2.

Eine Elektrodenanordnung, von der eine Elektrode 6 im Messrohr 2 dargestellt ist, ist so angeordnet, dass eine Spannung 7, die durch einen Pfeil symbolisiert ist, im Wesentlichen senkrecht zum Magnetfeld 5 und im Wesentlichen senkrecht zur Durchflussrichtung 3 abgenommen werden kann, wenn sich das Fluid bewegt. Die Größe der Spannung 7 ist ein Maß für die Durchflussgeschwindigkeit und damit ein Maß für den Durchfluss des Fluids durch das Messrohr 2.

Die Sattelspulen 4 sind in der Draufsicht (also in einer Ansicht aus einer Richtung parallel zum Magnetfeld 5) im Wesentlichen rechteckförmig ausgebildet. Hierbei gibt es zwei erste Schenkel 8, die parallel zur Durchflussrichtung 3 verlaufen, und zwei zweite Schenkel 9, die an die Krümmung des Messrohrs 2 angepasst sind. Dadurch ist es möglich, die Sattelspulen 4 relativ dicht an das Messrohr 2 anzunähern und trotzdem ein Magnetfeld zu erzeugen. Ein Polschuh oder ein Joch ist hierzu jedoch nicht erforderlich. Die ersten und die zweiten Schenkel können geradlinig verlaufen oder mehrere geradlinig verlaufende Abschnitte aufweisen, die gegenseitig Winkel einschließen.

Fig. 2 zeigt nun wesentliche Teile des Durchflussmessers 1 in einer vergrößerten Ausschnittsdarstellung. Die Darstellung der Fig. 2 zeigt einen Schnitt in der Ebene, in der die Elektroden 6 angeordnet sind.

Die Elektroden 6 sind von einem schematisch dargestellten Anschlussgehäuse 10 umgeben. Dieses Anschlussgehäuse 10 verhindert, dass sich die ersten Schenkel 8 der Sattelspulen 4 der Elektrode 6 nähern können, d. h. es verbleibt ein deutlicher Abstand zwischen den ersten Schenkeln 8 der Sattelspule 4 und der Elektrode 6. Dies hat zur Folge, dass sich ein Magnetfeld ausbildet, das sich zur Elektrode 6 hin stark abschwächt. Um dies zu verdeutlichen, ist eine Feldlinie 11 dieses Magnetfelds gestrichelt eingezeichnet. Diese Feldlinie 11 hat einen relativ großen Abstand zur Elektrode 6.

Um dieses Problem zu beseitigen, ist ein magnetisch leitendes Element 12 in einen Spalt 13 zwischen dem ersten Schenkel 8 der Sattelspule 4 und dem Messrohr 2 eingefügt worden. Dieses Element 12 hat eine Länge L in Umfangsrichtung oder quer zur Durchflussrichtung 3, d. h. es geht vom Innenrand 14 des ersten Schenkels 8 aus und erstreckt sich über die Länge L unter dem ersten Schenkel 8 hindurch und endet zwischen dem ersten Schenkel 8 und dem Messrohr.

Das magnetisch leitfähige Element 12 verändert nun das Magnetfeld so, dass es näher an die Elektrode 6 heranrückt. Hierzu ist eine Feldlinie 15 dargestellt, an der das Magnetfeld die gleiche Feldstärke hat wie ohne das Element 12 an der zuvor diskutierten Feldlinie 11. Ein Schnittpunkt P der Feldlinie 15 mit dem Messrohr 2 wird weiter in Richtung auf die Elektrode 6 verschoben. Das Messsignal steigt dann, wie erwünscht, an. Durch eine geeignete Länge L, d. h. die Erstreckung des Elements in Umfangs- oder Tangentialrichtung des Messrohres 2, lässt sich ein Punkt P mit maximalem magnetischen Fluss finden. Dieser Punkt ist mit der Länge L des Elements 12 bewegbar. Je länger die Länge L ist, desto näher kommt der Punkt P an die Elektrode 6.

Nur ein kleiner Teil des magnetischen Flusses einer ganzen Sattelspule 4 läuft durch das Element 12, aber dieser Teil des magnetischen Flusses wird von dem Element örtlich konzentriert. Im Gegensatz hierzu wird im Stand der Technik bei Verwendung eines Polschuhs oder Jochs der gesamte Fluss durch den Polschuh geleitet.

Das Messrohr 2 ist aus einem magnetisch nicht leitenden Material, beispielsweise einem Kunststoff, gebildet. Das Magnetfeld schließt sich durch ein äußeres Rohr 16, das das Messrohr 2 und die Sattelspulen 4 sowie das Anschlussgehäuse 10 der Elektroden 6 umgibt. Dieses Rohr 16 ist aus Gründen der Übersichtlichkeit in Fig. 1 nicht dargestellt. Es ist aus einem magnetisch leitenden Material gebildet, beispielsweise aus Weicheisen.

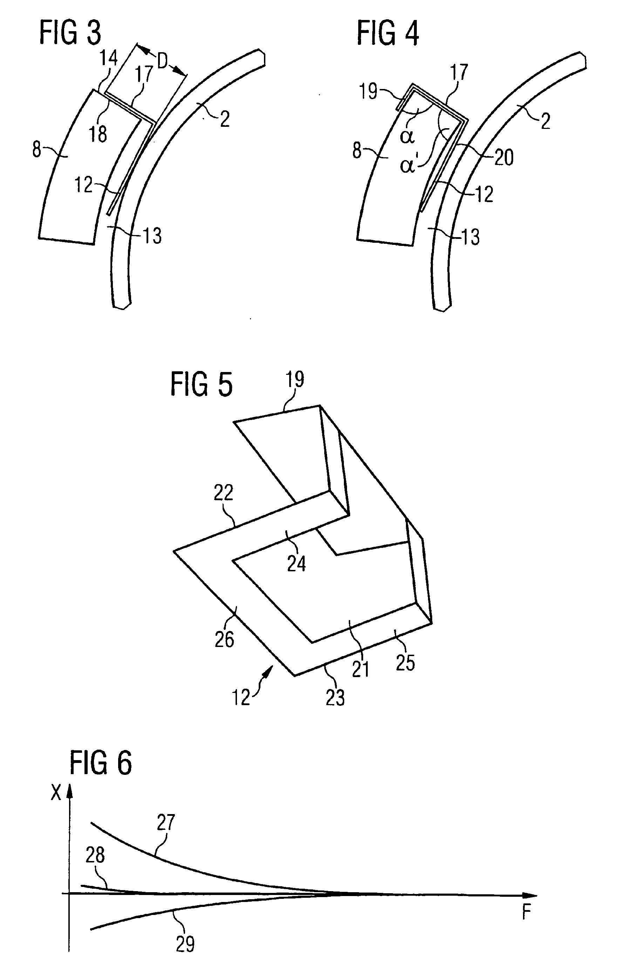

In den Fig. 3 bis 5 sind nun verschiedene Möglichkeiten gezeigt, wie das Element 12 ausgebildet sein kann. Gleiche und einander entsprechende Teile wie in Fig. 2 sind mit den gleichen Bezugszeichen versehen. Das äußere Rohr 16 ist weggelassen.

In Fig. 3 hat das Element 12 einen abgewinkelten Abschnitt 17 mit einer Breite D. Dieser Abschnitt 17 hat praktisch keine magnetische Funktion. Er dient lediglich dazu, dass das Element 12 am ersten Schenkel 8 festgelegt werden kann und zwar an seiner Innenseite 14. Die Innenseite 14 ist, wie aus Fig. 1 zu erkennen ist, die Seite des ersten Schenkels 8, die von der Sattelspule 4 umgeben ist, also dem anderen ersten Schenkel 8, der in Fig. 1 nicht zu erkennen ist, gegenüberliegt.

Man kann den Abschnitt 17 einfach an dem ersten Schenkel 8 der Sattelspule zur Anlage bringen. Man kann aber auch einen Kleber 18 vorsehen, der zwischen dem Abschnitt 17 und dem ersten Schenkel 8 angebracht wird und den ersten Abschnitt 17 am ersten Schenkel 8 festklebt. Der Kleber 18 kann beispielsweise in der Form eines doppeltklebenden Klebestreifens ausgebildet sein. Alternativ kann der Kleber zwischen dem Messrohr 2 und dem Element 12 bzw. zwischen dem Element 12 und dem Schenkel 8 angebracht werden.

In Durchflussrichtung erstreckt sich das Element 12 vorzugsweise über die gesamte axiale Länge des ersten Schenkels 8, d. h. über die Länge zwischen den beiden zweiten Schenkeln 9.

Fig. 4 zeigt eine Ausführungsform, bei der das Element 12 als Clip ausgebildet ist. Es ist zu diesem Zweck U-förmig ausgebildet mit dem Abschnitt 17 als Basis und zwei Armen 19, 20, wobei der dem Messrohr 2 benachbarte Arm 20 länger ist als der Arm 19 auf der gegenüberliegenden Seite des ersten Schenkels 8. Der Arm 19 hat ebenfalls praktisch keine magnetische Funktion. Er dient lediglich dazu, das Element 12 durch Klemmwirkung auf dem ersten Schenkel 8 der Sattelspule 4 festzuhalten. Hierzu ist das Element 12 vorgespannt, d. h. der Arm 19 schließt mit dem Abschnitt 17 einen Winkel α ein, der etwas kleiner ist als der Winkel an der entsprechenden Kante des ersten Schenkels 8. In gleicher Weise schließt der Arm 20 mit dem Abschnitt 17 einen Winkel α' ein, der ebenfalls etwas kleiner ist, als dies durch die Geometrie des Schenkels 8 vorgegeben ist. Dadurch wird eine Eigenspannung erzeugt, die das Element 12 sicher auf dem ersten Schenkel 8 hält.

Das Element 12 wird also als Clip mit einer kleinen Kraft auf den ersten Schenkel 8 aufgeschoben. Man kann später den Raum zwischen dem äußeren Rohr 16 und dem Messrohr 2 mit einer Gussmasse ausfüllen, so dass die Sattelspulen 4, die Elemente 12 und die Leitungen sowie das Anschlussgehäuse 10 und die Elektrode 6 mechanisch befestigt sind.

Das Element 12 muss nicht in mechanischem Kontakt mit der Sattelspule 4 stehen. Es genügt, wenn es zwischen der Sattelspule 4 und dem Messrohr 2 angebracht ist.

Selbstverständlich sind derartige Elemente 12 zwischen allen vier ersten Schenkeln 8 der beiden Sattelspulen 4 und dem Messrohr 2 angeordnet.

Eine nicht näher dargestellte Variante besteht darin, dass das Element aus einem Streifen aus magnetisch leitendem Kleber oder Kunststoff gebildet ist. Hierzu wird beispielsweise Magnetpulver oder Weicheisenpulver mit einem Klebstoff gemischt und dieser Klebstoff wird positionsgenau zwischen dem ersten Schenkel 8 und dem Messrohr 2 angebracht.

Vorzugsweise ist jedoch das Element 12 aus weichmagnetischem Eisen. Weichmagnetisches Eisen leitet ein Magnetfeld, wie dies an sich bekannt ist.

Fig. 5 zeigt eine weitere Ausgestaltung, bei der ein Element 12, das ansonsten im Wesentlichen dem der Fig. 4 entspricht, eine Ausnehmung 21 zwischen seinen in Durchflussrichtung 3 liegenden Enden 22, 23 aufweist. Dadurch entstehen magnetisch leitende Streifen 24, 25, die das Magnetfeld zu einem Verteilerstreifen 26 führen. Mit dieser Ausgestaltung wird ein Magnetfeld erzeugt, das etwas um den Punkt P gespreizt ist.

In nicht näher dargestellter Weise kann auch vorgesehen sein, dass die Oberfläche des Elements 12 gewellt ist oder das Element 12 selbst gewellt ist. Die Struktur könnte beispielsweise sinusförmig sein.

Fig. 6 zeigt schematisch die Auswirkungen des Elements 12. Eine Kurve 27 stellt einen relativen Fehler X über den Durchfluss F dar. Es ist zu erkennen, dass bei kleinen Durchflussraten der Messfehler stark ansteigt. Mit anderen Worten entsteht aufgrund eines zu geringen Magnetfelds im Bereich der Elektroden 6 ein geringes Messsignal und ein erhöhtes Signal/Rausch-Verhältnis.

Eine Kurve 28 stellt den Fehlerverlauf für ein Element 12 mit optimaler Länge L dar. Es ist zu erkennen, dass der Fehler auch bei kleinen Durchflussraten relativ klein bleibt.

Eine Kurve 29 stellt die Situation dar, bei der zwar ein Element 12 verwendet wird, die Länge L dieses Elements aber zu groß ist. Der Fehler bleibt zwar kleiner als ohne Element 12. Wenn die Länge L zu groß ist, ist das Messergebnis aber nicht optimal.

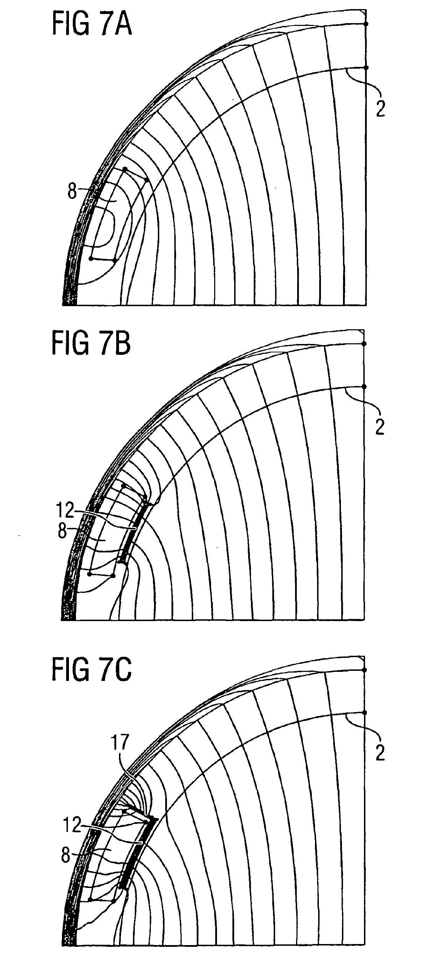

In Fig. 7 sind die Auswirkungen des Elements 12 erkennbar. Die drei Teilfiguren zeigen die magnetischen Feldlinien, also die Linien gleichen magnetischen Flusses, für unterschiedliche Ausgestaltungen. In Fig. 7a ist das magnetische Feld dargestellt, wenn kein Element 12 vorhanden ist. Es ist erkennbar, dass die Feldliniendichte auf der Innenseite des Messrohres 2 an der Unterkante der Fig. 7a nicht allzu groß ist, jedenfalls kleiner als im Innern des Messrohrs (bezogen auf die Darstellung der Fig. 7a: weiter nach rechts).

Fig. 7b zeigt ein entsprechendes Feldlinienbild mit einem Element 12. Es ist zu erkennen, dass die Feldliniendichte in dem Bereich auf der Innenseite des Messrohres 2 stark zugenommen hat.

Noch deutlicher wird die Situation, wenn ein Element 12 mit einem Abschnitt 17 verwendet wird. Die Feldliniendichte ist nun in dem Bereich an der Innenseite des Messrohres 2 unterhalb des ersten Schenkels 8 größer geworden. Dies ist in Fig. 7c dargestellt.

## Patentansprüche

1. Magnetisch induktiver Durchflussmesser mit einem Messrohr, einer Elektrodenanordnung mit Elektroden, die auf einander gegenüberliegenden Seiten des Messrohrs quer zu einer Durchflussrichtung durch das Messrohr angeordnet sind, und einer Spulenanordnung mit mindestens einer Sattelspule, deren Achse quer zur Durchflussrichtung und quer zur Elektrodenanordnung verläuft und die vier Schenkel aufweist, von denen zwei erste Schenkel parallel zur Durchflussrichtung und zwei zweite Schenkel in Umfangsrichtung des Messrohres verlaufen, **dadurch gekennzeichnet, dass** zwischen jedem ersten Schenkel (8) und dem Messrohr (2) jeweils ein magnetisch leitendes Element (12) angeordnet ist, das einen ersten Teil des magnetischen Flusses aufnimmt, wobei ein zweiter Teil des magnetischen Flusses aus einem von der Sattelspule (4) umgebenen Bereich am Element (12) vorbei tritt.

2. Durchflussmesser nach Anspruch 1, **dadurch gekennzeichnet, dass** das Element (12) von einem Bereich am Innenrand (14) des ersten Schenkels (8) ausgeht und zwischen dem ersten Schenkel (8) und dem Messrohr (2) endet.

3. Durchflussmesser nach Anspruch 1 oder 2, **dadurch gekennzeichnet, dass** das Element (12) einen abgewinkelten Abschnitt (17) aufweist, der von innen am ersten Schenkel (8) anliegt.

4. Durchflussmesser nach Anspruch 3, **dadurch gekennzeichnet, dass** der Abschnitt (17) am Schenkel (8) oder am Messrohr (2) befestigt sein kann.

5. Durchflussmesser nach einem der Ansprüche 1 bis 4, **dadurch gekennzeichnet, dass** das Element (12) U-förmig mit zwei Armen (19, 20) ausgebildet und auf den ersten Schenkel (8) von innen aufgesteckt ist.

6. Durchflussmesser nach Anspruch 5, **dadurch gekennzeichnet, dass** die Arme (19, 20) aufeinander zu vorgespannt sind.

7. Durchflussmesser nach Anspruch 5 oder 6, **dadurch gekennzeichnet, dass** der Arm (20) zwischen dem ersten Schenkel (8) und dem Messrohr (2) quer zur Durchflussrichtung (3) länger als der andere Arm (19) ist.

8. Durchflussmesser nach einem der Ansprüche 1 bis 7, **dadurch gekennzeichnet, dass** sich das Element (12) über die Länge des ersten Schenkels (8) in Durchflussrichtung (3) erstreckt.

9. Durchflussmesser nach einem der Ansprüche 1 bis 8, **dadurch gekennzeichnet, dass** das Element (12) in Durchflussrichtung (3) zwischen seinen Enden (22, 23) eine Ausnehmung (21) aufweist.

10. Durchflussmesser nach einem der Ansprüche 1 bis 9, **dadurch gekennzeichnet, dass** das Element (12) eine wellenförmige Oberfläche aufweist.

11. Durchflussmesser nach einem der Ansprüche 1 bis 10, **dadurch gekennzeichnet, dass** das Element (12) durch weichmagnetisches Eisen gebildet ist.

12. Durchflussmesser nach einem der Ansprüche 1 bis 10, **dadurch gekennzeichnet, dass** das Element (12) durch einen magnetisch leitenden Kunststoff gebildet ist.

13. Durchflussmesser nach einem der Ansprüche 1 bis 12, **dadurch gekennzeichnet, dass** das Element (12) zusammen mit dem Messrohr (2) vergossen ist.

14. Durchflussmesser nach einem der Ansprüche 1 bis 13, **dadurch gekennzeichnet, dass** das Element (12) eine Erstreckung quer zur Durchflussrichtung (3) hat, bei der ein Messfehler einen Minimalwert aufweist.

## Claims

1. Magnetically inductive flowmeter having a measuring tube, an electrode arrangement with electrodes, which are arranged on opposite sides of the measuring tube transversely with respect to a flow direction through the measuring tube, and a coil arrangement having at least one saddle coil, whose axis runs transversely with respect to the flow direction and transversely with respect to the electrode arrangement and which has four limbs, of which two first limbs run parallel to the flow direction and two second limbs run in the circumferential direction of the measuring tube, **characterized in that** in each case one magnetically conductive element (12) is arranged between each first limb (8) and the measuring tube (2) and accommodates a first proportion of the magnetic flux, a second proportion of the magnetic flux passing out of a region surrounded by the saddle coil (4), past the element (12).

2. Flowmeter according to Claim 1, **characterized in that** the element (12) starts from a region on the inner edge (14) of the first limb (8) and ends between the first limb (8) and the measuring tube (2).

3. Flowmeter according to Claim 1 or 2, **characterized in that** the element (12) has a bent-back section (17), which bears from the inside against the first limb (8).

4. Flowmeter according to Claim 3, **characterized in that** the section (17) can be fixed to the limb (8) or to the measuring tube (2).

5. Flowmeter according to one of Claims 1 to 4, **characterized in that** the element (12) is in the form of a U with two arms (19, 20) and is plugged onto the first limb (8) from the inside.

6. Flowmeter according to Claim 5, **characterized in that** the arms (19, 20) are prestressed towards one another.

7. Flowmeter according to Claim 5 or 6, **characterized in that** the arm (20) between the first limb (8) and the measuring tube (2) transversely with respect to the flow direction (3) is longer than the other arm (19).

8. Flowmeter according to one of Claims 1 to 7, **characterized in that** the element (12) extends in the flow direction (3) over the length of the first limb (8).

9. Flowmeter according to one of Claims 1 to 8, **characterized in that** the element (12) has a cutout (21) in the flow direction (3) between its ends (22, 23).

10. Flowmeter according to one of Claims 1 to 9, **characterized in that** the element (12) has an undulating surface.

11. Flowmeter according to one of Claims 1 to 10, **characterized in that** the element (12) is formed by soft-magnetic iron.

12. Flowmeter according to one of Claims 1 to 10, **characterized in that** the element (12) is formed by a magnetically conductive plastic.

13. Flowmeter according to one of Claims 1 to 12, **characterized in that** the element (12) is cast together with the measuring tube (2).

14. Flowmeter according to one of Claims 1 to 13, **characterized in that** the element (12) has an extent transverse with respect to the flow direction (3), in which case a measurement error has a minimum value.

## Revendications

1. Débitmètre électromagnétique comprenant un tube de mesure, un dispositif ayant des électrodes, qui est disposé sur des faces opposées du tube de mesure transversalement à un sens de passage dans le tube de mesure, et un dispositif à bobine ayant au moins une bobine en sellette, dont l'axe s'étend transversalement au sens de passage et transversalement au dispositif d'électrodes et qui a quatre branches dont les deux premières branches sont parallèles au sens de passage et les deux deuxièmes branches s'étendent dans la direction périphérique du tube de mesure, **caractérisé en ce qu'**il est disposé entre chaque première branche (8) et le tube (2) de mesure, respectivement, un élément (12) conducteur magnétiquement qui reçoit une première partie du flux magnétique, une deuxième partie du flux magnétique provenant d'une zone entourée par la bobine (4) en sellette, passant devant l'élément (12).

2. Débitmètre suivant la revendication 1, **caractérisé en ce que** l'élément (12) part d'une partie du bord (14) intérieur de la première branche (8) et se termine entre la première branche (8) et le tube (2) de mesure.

3. Débitmètre suivant la revendication 1 ou 2, **caractérisé en ce que** l'élément (12) a un tronçon (17) coudé qui s'applique de l'intérieur à la première branche (8).

4. Débitmètre suivant la revendication 3, **caractérisé en ce que** le tronçon (17) peut être fixé à la branche (8) ou au tube (2) de mesure.

5. Débitmètre suivant l'une des revendications 1 à 4, **caractérisé en ce que** l'élément (12) est en forme de U en ayant deux bras (19, 20) et est enfilé de l'intérieur sur la première branche (8).

6. Débitmètre suivant la revendication 5, **caractérisé en ce que** les bras (19, 20) sont mis en précontrainte l'un par rapport à l'autre.

7. Débitmètre suivant la revendication 5 ou 6, **caractérisé en ce que** le bras (20) entre la première branche (8) et le tube (2) de mesure est plus long transversalement au sens (3) de passage que l'autre bras (19).

8. Débitmètre suivant l'une des revendications 1 à 7, **caractérisé en ce que** l'élément (12) s'étend sur la longueur de la première branche (8) dans le sens (3) de passage.

9. Débitmètre suivant l'une des revendications 1 à 8, **caractérisé en ce que** l'élément (12) a, dans le sens (3) de passage, un évidement (21) entre ses extrémités (22, 23).

10. Débitmètre suivant l'une des revendications 1 à 9, **caractérisé en ce que** l'élément (12) a une surface ondulée.

11. Débitmètre suivant l'une des revendications 1 à 10, **caractérisé en ce que** l'élément (12) est formé de fer magnétique doux.

12. Débitmètre suivant l'une des revendications 1 à 10, **caractérisé en ce que** l'élément (12) est formé d'une matière plastique conductrice magnétiquement.

13. Débitmètre suivant l'une des revendications 1 à 12, **caractérisé en ce que** l'élément (12) est coulé ensemble avec le tube (2) de mesure.

14. Débitmètre suivant l'une des revendications 1 à 13, **caractérisé en ce que** l'élément (12) a une étendue transversalement au sens (3) de passage, pour laquelle une erreur de mesure a une valeur minimum.
